# EUROPÄISCHE PATENTSCHRIFT

(11) **EP 1 302 995 B1**
(45) Veröffentlichungstag und Bekanntmachung des Hinweises auf die Patenterteilung: **22.09.2010**
(21) Anmeldenummer: 02022319.4
(22) Anmeldetag: 08.10.2002
(51) Int. Cl.: H01M 8/10, H01M 4/86, H01M 4/88, H01M 8/02

(54) **Verfahren zur Herstellung einer elektrochemischen Elektrode**
Pocess for fabrication of an electrochemical electrode
Procédé de fabrication d'un électrode électrochimique

(30) Priorität: 15.10.2001 DE 20118984 U; 27.11.2001 DE 10158848
(43) Veröffentlichungstag der Anmeldung: 16.04.2003
(73) Patentinhaber: Deutsches Zentrum für Luft- und Raumfahrt e.V., 51147 Köln (DE)
(72) Erfinder: Kaz, Till, 70186 Stuttgart (DE); Wagner, Norbert, 71065 Sindelfingen (DE); Gülzow, Erich, 71032 Böblingen (DE)
(74) Vertreter: Hoeger, Stellrecht & Partner Patentanwälte

(56) Entgegenhaltungen:
- EP-A- 0 926 753
- WO-A-00/30199
- GB-A- 2 336 712
- US-A- 4 857 420
- US-A- 5 252 410
- US-A1- 2001 026 884
- PATENT ABSTRACTS OF JAPAN Bd. 010, Nr. 317 (E-449), 28. Oktober 1986 (1986-10-28) & JP 61 128467 A (FUJI ELECTRIC CO LTD), 16. Juni 1986 (1986-06-16)

## Beschreibung

Die Erfindung betrifft ein Verfahren zur Herstellung einer elektrochemischen Elektrode mit einer flächig ausgedehnten elektrochemisch aktiven Schicht.

Elektrochemische Elektroden mit einer flächig ausgedehnten elektrochemisch aktiven Schicht werden beispielsweise in galvanischen Zellen oder Brennstoffzellen eingesetzt. An der elektrochemisch aktiven Schicht (Reaktionsschicht) erfolgen dabei entsprechende elektrochemische Reaktionen wie die Zersetzung von Wasser in einer Elektrolysezelle oder der umgekehrte Prozeß in einer Brennstoffzelle.

In der GB 2 336 712 A ist eine Verteilerplatte für eine Brennstoffzelle beschrieben, welche ein Substrat und beabstandete Wände umfaßt; die Wände sind auf dem Substrat aus einer Reihe von anfänglich flüssig bildbaren Schichten hergestellt., welche erstarren und miteinander und mit dem Substrat sich verbinden. Die Wände bilden Begrenzungen für Strömungskanäle.

Es liegt dabei die Aufgabe zugrunde, ein Verfahren zu schaffen, welches eine Elektrode bereitstellt, die kostengünstig einsetzbar ist.

In der EP 0 932 753 A2 ist ein Verfahren zur Herstellung einer Funktionsschicht für Brennstoffzellen mittels Aufsprühung von Pulverpartikel beschrieben.

Diese Aufgabe wird erfindungsgemäß dadurch gelöst, dass eine Verteilerstruktur zur Zuführung von Medium zu der aktiven Schicht und/oder Abführung von Medium von der aktiven Schicht, welche Kanäle umfasst, auf die aktive Schicht mittels eines trockenen Pulvers über eine Maske aufgesprüht wird, wobei die Maske Ausnehmungen aufweist, über welche das trockene Pulver aufgesprüht wird, und Barrieren aufweist, welche bestimmte räumliche Bereiche der aktiven Schicht von der Pulverbeaufschlagung sperren, und wobei die Verteilerstruktur mittels eines ein elektrisch leitendes Füllmaterial und ein hydrophobierendes Material umfassendes Gemisch gebildet wird.

Günstigerweise wird die Verteilerstruktursukzessive in einer Mehrzahl von Schichten aufgesprüht. Dadurch läßt sich eine Kanalstruktur in der Verteilerstruktur bilden, welche beispielsweise zu der aktiven Schicht (Reaktionsschicht) hin eine immer feinere Verästelung aufweist.

Die entsprechende Kanalstruktur wird dabei dadurch ausgebildet, daß die Verteilerstruktur über eine Maske aufgesprüht wird. Die Maske ist dabei räumlich ausgebildet, indem sie Ausnehmungen aufweist, über welche Beschichtungsmaterial auf die aktive Schicht aufsprühbar ist und Barrieren aufweist, welche bestimmte räumliche Bereiche der aktiven Schicht von der Pulverbeaufschlagung sperren.

Die Maske kann in einer nicht unter die Ansprüche fallenden Ausführungsform auch zeitlich realisiert sein, indem entsprechend eine Sprühdüse räumlich gesteuert bewegt wird, um so die Kanalstruktur zu erzeugen.

Ganz besonders vorteilhaft ist es, wenn die Verteilerstruktur mittels eines trockenen Pulvers aufgesprüht wird. Auf diese Weise lassen sich beispielsweise Kanäle ausbilden, die eine Breite in der Größenordnung von 0,1 mm oder kleiner aufweisen. Dadurch wiederum läßt sich eine feine Verästelung erreichen, um eine gute Zuführung von Reaktanden zu der aktiven Schicht zu gewährleisten und ebenfalls eine gute Abführung von Reaktionsprodukten und insbesondere Wasser von der aktiven Schicht zu erreichen.

Günstigerweise wird die Verteilerstruktur nach der Aufsprühung fixiert, um diese zu stabilisieren.

Die Verteilerstruktur kann dabei thermisch und/oder strahlungsinduziert und/oder mechanisch und/oder chemisch fixiert werden.

Insbesondere wird die Verteilerstruktur durch Pressung oder Walzung fixiert und insbesondere kompaktiert.

Die Verteilerstruktur wird dabei mittels eines ein elektrisch leitendes Füllmaterial und ein hydrophobierendes Material umfassenden Gemisches gebildet.

Es kann auch vorgesehen sein, daß die aktive Schicht auf einen Träger aufgesprüht und/oder aufgewalzt wird, d. h. die Reaktionsschicht selber durch Aufsprühen und/oder Aufwalzen gebildet ist.

Wenn auf der aktiven Schicht einer elektrochemischen Elektrode eine Verteilerstruktur zur Zuführung von Medien zu der aktiven Schicht und/oder Abführung von der aktiven Schicht gebildet ist, dann lässt sich diese kostengünstig einsetzen.

Zur Durchführung der elektrochemischen Reaktionen müssen entsprechende Reaktionsmedien zu der aktiven Schicht zugeführt werden und gegebenenfalls

Reaktionsprodukte abgeführt werden. Bei einer Polymermembranelektrolyt-Brennstoffzelle muß beispielsweise Wasserstoff zu der Elektrode zugeführt werden, Sauerstoff zu der Kathode zugeführt werden und flüssiges Wasser von der Kathode abgeführt werden. Durch die Ausbildung der Verteilerstruktur auf der Elektrode selber läßt sich eine einfache und kostengünstige Gasbeaufschlagung der aktiven Schicht erreichen und entsprechend lassen sich die Reaktionsprodukte leicht abführen, ohne daß spezielle Gasversorgungsplatten vorgesehen werden müssen. Die Elektrode stellt selber die Struktur bereit, über welche sie mit Reaktanden versorgbar ist. Auf die gleiche Weise ist die Struktur bereitgestellt, über die Reaktionsprodukte abgeführt werden. Durch entsprechende Ausbildung läßt sich damit auch die Verteilerstruktur an die jeweiligen Anwendungen anpassen.

Insbesondere ist dabei die Verteilerstruktur mittels eines elektrisch leitenden Materials hergestellt. Beispielsweise zur Ausbildung eines Brennstoffzellenstapels muß dann zwischen benachbarten Elektroden nur noch eine elektrisch leitende Platte zur Trennung der entsprechenden Gasräume und zur elektrischen Hintereinanderschaltung benachbarter Brennstoffzelfenelemente vorgesehen werden. Dadurch wiederum läßt sich ein Brennstoffzellenstapel auf einfache und kostengünstige Weise herstellen.

Die Verteilerstruktur umfaßt Kanäle, über die gasförmige Reaktanden der aktiven Schicht zuführbar sind bzw. flüssige Reaktionsprodukte von der aktiven Schicht abführbar sind,

Ganz besonders vorteilhaft ist es, wenn die Kanäle in der Verteilerstruktur räumlich angeordnet sind und insbesondere entsprechend verästelt sind, um für eine gute stabile Reaktionsgasversorgung zu sorgen und weiterhin für eine stabile Reaktionsproduktabführung zu sorgen.

Insbesondere ist dabei die Verteilerstruktur derart aufgebaut, daß in Richtung der aktiven Schicht hin sich die Kanalstruktur verfeinert. Dadurch ist gewährleistet, daß zum einen die aktive Schicht großflächig mit Reaktanden beaufschlagbar ist und zum anderen auch Reaktionsprodukte von der aktiven Schicht ableitbar sind.

Günstigerweise umfaßt die Verteilerstruktur hydrophobe Kanäle, um Reaktionsgas zur aktiven Schicht zuführen zu können. Ferner umfaßt günstigerweise die Verteilerstruktur hydrophile Kanäle, um Wasser abführen zu können.

Ganz besonders vorteilhaft ist es, wenn die Verteilerstruktur auf die aktive Schicht aufgesprüht ist. Dadurch läßt sich auf einfache Weise die Verteilerstruktur integral an der Elektrode bilden, Durch Aufsprühung läßt sich ferner die Verteilerstruktur gezielt dimensionieren und insbesondere mit einer derartigen Kanalstruktur versehen, daß diese zu der aktiven Schicht hin eine immer feinere Verästelung aufweist. Da beispielsweise die aktive Schicht selber mittels eines Sprühverfährens (insbesondere in Kombination mit einem Walzverfahren) hergestellt werden kann, läßt sich auch die erfindungsgemäße elektrochemische Elektrode kostengünstig in der gleichen Vorrichtung fertigstellen.

Vorteilhafterweise ist dabei die Verteilerstruktur mehrschichtig aufgesprüht, um eine entsprechende Kanalstruktur auszubilden.

Um die aufgesprühte Verteilerstruktur zu stabilisieren, wird diese günstigerweise nach dem Aufsprühen fixiert. Diese Fixierung läßt sich beispielsweise thermisch und/oder strahlungsinduziert und/oder mechanisch und/oder chemisch erreichen.

Fertigungstechnisch besonders günstig ist es, wenn die Verteilerstruktur durch Pressung und/oder Walzung fixiert ist und dabei insbesondere kompaktiert ist.

Auf besonders kostengünstige Weise läßt sich die Verteilerstrukturaus einem Gemisch bilden, welches ein elektrisch leitendes Füllmaterial und ein hydrophobierendes Material umfaßt. Das elektrisch leitende Füllmaterial sorgt für die elektrische Leitfähigkeit der Verteilerstruktur, so daß eine gute elektrische Kontaktierung zu der aktiven Schicht hergestellt ist und weiterhin auch beispielsweise auch in einem Brennstoffzellenstapel sich benachbarte Brennstoff zellen elektrisch hintereinanderschalten lassen. Das hydrophobierende Material, welches insbesondere auch Bindemittelwirkung hat, sorgt dann dafür, daß sich in der Verteilerstruktur hydrophobe Kanäle ausbilden können.

Beispielsweise handelt es sich bei dem hydrophobierenden Material um PTFE (Polytetrafluorethylen) und bei dem elektrisch leitenden Füllmaterial um Kohlenstoff beispielsweise in der Form von Ruß.

Es kann auch vorgesehen sein, daß das Material für die Verteilerstruktur neben weiteren Zusätzen wie Porenbildner und Stabilisatoren auch katalytische Zusätze umfaßt, die beispielsweise zur Reinigung von Reaktionsgasen oder zu deren Reformation vor Erreichung der aktiven Schicht dienen können. Insbesondere wird mittels elektrochemischen Elektroden eine Elektroden-Membran-Einheit gebildet, indem beiderseitig einer Membran erfindungsgemäße Elektroden angeordnet sind. Solche Elektroden-Membran-Einheiten lassen sich dann zur Ausbildung entsprechender Brennstoffzellen wie Wasserstoff-Polymermembranelektrolyt-Brennstofzellen oder Direkt-Methanol-Brennstoffzellen verwenden. Aus solchen Brennstoffzellen wiederum lassen sich Brennstoffzellenstapel herstellen. Vorteilhafterweise läßt sich dann eine Elektrode oder eine Elektroden-Membran-Einheit in einer Brennstoffzelle verwenden.

Die nachfolgende Beschreibung einer bevorzugten Ausführungsform dient im Zusammenhang mit der Zeichnung der näheren Erläuterung der Erfindung. Es zeigen:
- Figur 1: eine Draufsicht auf eine Elektroden-Membran-Einheit;
- Figur 2: eine Schnittansicht der Elektroden-Membran-Einheit gemäß Figur 1;
- Figur 3: ein schematisches Blockschaltbild für ein Herstellungs- verfahren einer elektrochemischen Elektrode und
- Figuren 4 bis 7: einzelne Schritte des Aufsprühvorgangs zur Bildung einer Verteilerstruktur.

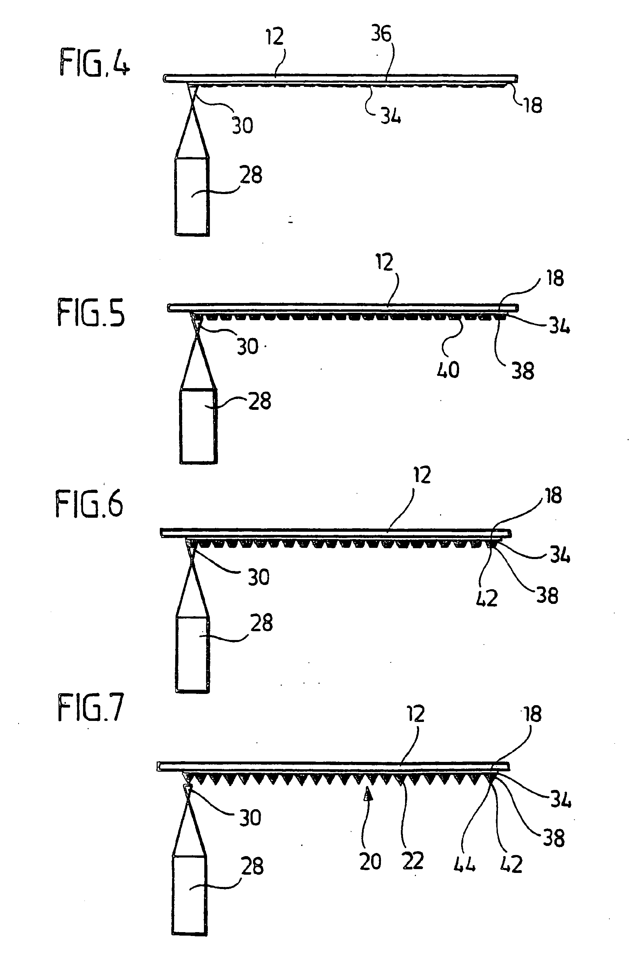

Elektrochemische Elektroden werden beispielsweise in Brennstoffzellen oder Elektrolysezellen eingesetzt. In Figur 1 ist als Ausführungsform einer erfindungsgemäßen elektrochemischen Elektrode eine als Ganzes mit 10 bezeichnete Elektroden-Membran-Einheit gezeigt, welche in Brennstoffzellensystem und insbesondere Polymermembranelektrolyt-Brennstoffzellen-Systemen (PEFC-Systeme) zum Einsatz kommen kann. Diese Elektroden-Membran-Einheit 10 umfaßt eine Membran 12, welche eine erste Elektrode 14 und eine zweite Elektrode 16 voneinander trennt. Bei der ersten Elektrode 14 handelt es sich beispielsweise um eine Kathode oder Anode, wobei dann die zweite Elektrode 16 entsprechend eine Anode oder Kathode ist. Die Membran 12, bei der es sich insbesondere um eine Polymermembran handelt, ermöglicht dabei den Ionentransport zwischen den beiden Elektroden 14 und 16. Sie wirkt als Elektrolyt, als Träger der jeweiligen Katalysatorschichten (Reaktionsschichten) der beiden Elektroden 14 und 16 und als Separator für den beiden Elektroden 14, 16 jeweils zugeführte Reaktanden (Reaktionsmedien).

Auf der Membran 12 ist dann jeweils für die Elektroden 14 und 16 als Katalysatorschicht eine elektrochemisch aktive Schicht 18 (Reaktionsschicht) angeordnet, an welcher die elektrochemischen Prozesse jeweils ablaufen. Diese umfaßt ein Katalysatormaterial wie Platin. Bei einer Polymermembranelektrolyt-Brenristoff-zelle läuft beispielsweise an der Anode die Teilreaktion H₂ → 2H⁺ + 2e⁻ ab und an der Kathode die Teilreaktion 2H⁺ + 0,5 O₂ + 2e⁻ → H₂O.

Damit diese Reaktionen stattfinden können, muß der Anode als Reaktand Wasserstoff zugeführt werden, der Kathode Sauerstoff als weiterer Reaktand zugeführt werden und von der Kathode Wasser als Reaktionsprodukt abgeführt werden.

Bei einer Direktmethanol-Brennstoffzelle (DMFC) müssen beispielsweise der Anode Methanol und Wasser als Reaktanden zugeführt werden und Kohlendioxid als Reaktionsprodukt abgeführt werden. Der Kathode muß Sauerstoff als Reaktand zugeführt werden und Wasser als Reaktionsprodukt abgeführt werden,

Die Elektroden 14, 16 umfassen jeweils eine Verteilerstruktur 20 zur Zuführung der entsprechenden Reaktionsmedien (bei der Polymermembranelektrolyt-Brennstoffzelle Wasserstoff zur Anode und Sauerstoff zur Kathode) und zur Abführung der Reaktionsprodukte (bei der Polymermembranelektrolyt-Brennstoffzelle Wasser von der Kathode). Diese erfindungsgemäße Verteilerstruktur 20 ist integraler Bestandteil der jeweiligen Elektrode 14, 16.

Die Verteilerstruktur 20 wird aus einem elektrisch leitenden Füllmaterial wie Kohlenstoff und einem hydrophobierenden Material, welches gleichzeitig als Bindemittel wirkt, wie Polymertetrafluorethylen (PTFE) hergestellt. Dadurch lassen sich in der Verteilerstruktur 20 sowohl hydrophobe Kanäle zur Zuführung von gasförmigen Reaktionsmedien als auch hydrophile Kanäle zur Wasserabfuhr von der aktiven Schicht 18 herstellen.

Diesem Gemisch aus elektrisch leitendem Füllmaterial und hydrophobierendem Material können noch weitere, insbesondere katalytische Zusätze zugemischt sein, um beispielsweise eine Reaktionsgasreinigung oder Reformierung von Reaktionsgas bei der Zuführung zu der entsprechenden Elektrode 14, 16 zu erreichen.

Die eigentliche Aufgabe der Verteilerstruktur 20 ist die Ermöglichung des Stofftransports (Zufuhr und/oder Abfuhr) für die entsprechenden elektrochemisch aktiven Schichten 18. Dazu umfaßt die Verteilerstruktur 20 eine Mehrzahl von Kanälen 22. Die Verteilerstruktur 20 bildet dabei insbesondere eine derartige Kanalstruktur aus, daß die Kanäle sich in Richtung zur elektrochemisch aktiven Schicht 18 zu verfeinern, d. h. räumlich dreidimensional verästelt ausgebildet sind, wobei die Verästelung in Richtung zu der elektrochemisch aktiven Schicht 18 hin immer feiner wird. Dadurch ist es eben möglich, gasförmige Reaktanden zu der elektrochemisch aktiven Schicht 18 zuzuleiten und auch Flüssigkeiten abzuleiten. Dies wiederum wird besonders vorteilhaft unterstützt durch die Ausbildung von hydrophilen Kanälen.

Es läßt sich ein Brennstoffzellenstapel dadurch bilden, daß Elektroden-Membran-Einheiten 10 miteinander verbunden werden, wobei zwischen gegenüberliegenden Kathoden und Anoden nur noch eine elektrisch leitende Platte wie beispielsweise eine Graphitplatte oder Metallplatte positioniert werden muß, um die entsprechenden Gasräume der jeweiligen Elektroden voneinander zu trennen und dabei eine elektrische Hintereinanderschaltung zu bewirken. Da die Verteilerstruktur 20 erfindungsgemäß mit einem elektrisch leitenden Material hergestellt ist, ist für die elektrische Kontaktierung zwischen der elektrochemisch aktiven Schicht 18 und der entsprechenden Verbindungsplatte automatisch gesorgt.

Erfindungsgemäß wird die Verteilerstruktur 20 auf die entsprechende elektrochemisch aktive Schicht 18 unter Verwendung eines trockenen Pulvers aufgesprüht. Dieses Pulver umfaßt dabei, wie oben beschrieben, ein Gemisch aus einem elektrisch leitenden Füllmaterial wie Kohlenstoff und einem hydrophobierenden Material wie beispielsweise PTFE und eventuellen weiteren Zusätzen; neben katalytisch wirksamen Materialien können diese Zusätze beispielsweise auch Porenbildner und/oder Stabilisatoren umfassen.

Das entsprechende trockene Pulver wird mit möglichst homogener Verteilung aus einem entsprechenden Gemisch in einem Homogenisierer 24 hergestellt. Ein solcher Homogenisierer für ein Pulvermaterial mit einer mit dem Pulvermaterial befüllbaren Homogenisierungskammer, in welcher ein erster Rotor drehbar angeordnet ist und beabstandet zu diesem ein zweiter Rotor drehbar angeordnet ist, wobei die beiden Rotoren gegenläufig rotieren, um gegenläufige Strömung zu erzeugen, über die das Pulvermaterial zerreibbar ist, ist in der nicht vorveröffentlichten deutschen Patentanmeldung Nr. 101 54 123 vom 26. Oktober 2001 des Deutschen Zentrums für Luft- und Raumfahrt e.V. beschrieben. Auf diese Anmeldung wird ausdrücklich Bezug genommen.

Das homogenisierte Pulver wird dann einem Pulverförderer 26 zugeführt und von dort über eine Sprühdüse 28 in einem Sprühstrahl 30 auf die elektrochemisch aktive Schicht 18 aufgesprüht.

Ein Ausführungsbeispiel eines Pulverförderers 26, welcher einen Aufnahmebehälter für Pulver und einen Abfuhranschluß zur Abfuhr von Pulver aus dem Aufnahmebehälter in einem Gasstrom aufweist, wobei dieser Abfuhranschluß an die Sprühdüse 28 gekoppelt ist, ist in der nicht vorveröffentlichten deutschen Anmeldung mit der Nr. 101 34 498 vom 2. Juli 2001 des gleichen Anmelders beschrieben. Auf diese Anmeldung wird ausdrücklich Bezug genommen.

Der Pulverförderer umfaßt dabei eine Gasstrom-Einkopplungsvorrichtung für den Aufnahmebehälter, wobei durch diese ein erster Gasstrom in den Aufnahmebehälter einkoppelbar ist, durch den eine Pulverwolke in dem Aufnahmebehälter bildbar ist, und ein zweiter Gasstrom in den Aufnahmebehälter zur Zerstäubung der Pulverwolke einkoppelbar ist; über den Abfuhranschluß ist dann mittels eines Schöpfrohres Pulver aus der Pulverwolke abführbar.

Die auf die elektrochemisch aktive Schicht 18 aufgesprühte Verteilerstruktur wird anschließend stabilisiert und insbesondere fixiert. Der Fixierungsvorgang kann dabei thermisch und/oder strahlungsinduziert und/oder mechanisch und/oder chemisch erfolgen. Bei dem in Figur 3 gezeigten schematischen Ausführungsbeispiel erfolgt die Fixierung durch Aufwalzung beispielsweise mittels eines beabstandeten Walzenpaares 32, wobei diese Walzen gegenläufig rotieren und die elektrochemisch aktive Schicht mit der Verteilerstruktur zwischen den Walzen dieses Walzenpaares 32 hindurchgeführt wird.

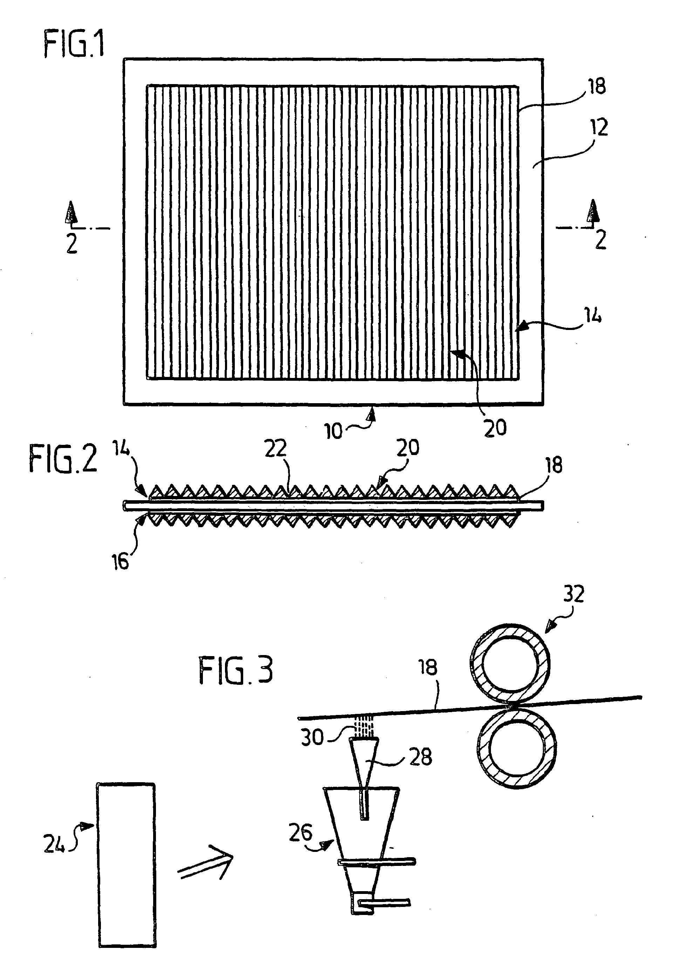

Zur Herstellung der Verteilerstruktur 20 auf der elektrochemisch aktiven Schicht 18 werden sukzessive einzelne Schichten aufgesprüht. Dies ist in den Figuren 4 bis 7 schematisch gezeigt:

Die Verteilerstruktur 20 wird dadurch mehrschichtig aufgebaut, daß zu ihrer Ausbildung eine Mehrzahl von getrennten Sprühprozessen durchgeführt wird.

Auf diese Weise läßt sich die oben beschriebene Kanalstruktur erreichen, bei der die Kanäle zu der elektrochemisch aktiven Schicht 18 hin sehr fein verästelt sind, während die Verästelung von der elektrochemisch aktiven Schicht 18 weg gröber wird. Es lassen sich dadurch Kanäle 22 ausbilden, welche beispielsweise einen Abstand in der Größenordnung von 0,1 mm an der elektrochemisch aktiven Schicht 18 aufweisen.

Beispielsweise wird in einem ersten Sprühschritt, welcher schematisch in Figur 4 gezeigt ist, eine erste Schicht 34 auf die elektrochemisch aktive Schicht 18 aufgesprüht, wobei in dieser ersten Schicht 34 Teilkanäle 36 gebildet sind, die im Vergleich zu den in folgenden Sprühschritten hergestellten Teilkanälen (Figuren 5 bis 7) die geringsten Breitenabmessungen aufweisen. Die entsprechende Kanalstruktur für die Teilkanäle 36 wird dabei insbesondere durch Aufsprühen über eine Maske (in Figur 4 gezeigt) hergestellt, welche entsprechende Ausnehmungen aufweist, um das trockene Pulver auf die elektrochemisch aktive Schicht 18 aufsprühen zu können. Es kann alternativ auch vorgesehen sein, daß die Sprühdüse 28 entsprechend räumlich gesteuert bewegt wird, um diese Kanalstruktur herzustellen ("zeitliche Maske").

Nach dem Sprühen wird die Maske abgezogen und fakultativ eine Verpressung durchgeführt oder es kann eine Kompaktierung mit einer Walze durchgeführt werden. Die Fixierung kann aber auch erst nach dem letzten Sprühschritt (Figur 7) erfolgen.

In einem folgenden Schritt (Figur 5) wird dann beispielsweise über eine entsprechende vergröberte Maske auf diese erste Schicht 34 eine zweite Schicht 38 mit Teilkanälen 40 aufgesprüht.

Es können weitere entsprechende Schritte vorgesehen werden, wobei dann weitere Schichten 42 (Figur 6) und 44 (Figur 7) aufgesprüht werden, um so endgültig die Verteilerstruktur 20 mit den Kanälen 22 zu bilden. Insbesondere vergröbern sich dabei die jeweils zur Aufsprühung verwendeten Masken, um so eben die Kanalstruktur von der elektrochemisch aktiven Schicht 18 weg zu vergröbern.

Die entsprechende Schichtenfolge 34, 38, 42, 44 wird dann wie oben beschrieben fixiert, indem beispielsweise eine Verpressung oder Aufwalzung stattfindet. Damit wiederum ist die Verteilerstruktur 20 fertiggestellt.

Die elektrochemisch aktive Schicht 18 selber läßt sich beispielsweise dadurch herstellen, daß eine erste Schicht auf einen Träger aufgewalzt wird, bei dem es sich beispielsweise um ein Trägernetz handelt, und eine Reaktionsschicht aufgesprüht wird. Ein derartiges Verfahren ist in der nicht vorveröffentlichten deutschen Patentanmeldung Nr. 101 12 232 vom 7. März 2001 des gleichen Anmelders beschrieben; auf diese Anmeldung wird hiermit ausdrücklich Bezug genommen.

## Patentansprüche

1. Verfahren zur Herstellung einer elektrochemischen Elektrode mit einer flächig ausgedehnten, elektrochemisch aktiven Schicht, bei dem eine Verteilerstruktur zur Zuführung von Medium zu der aktiven Schicht und/oder Abführung von Medium von der aktiven Schicht, welche Kanäle umfasst, auf die aktive Schicht mittels eines trockenen Pulvers über eine Maske aufgesprüht wird, wobei die Maske Ausnehmungen aufweist, über welche das trockene Pulver aufgesprüht wird, und Barrieren aufweist, welche bestimmte räumliche Bereiche der aktiven Schicht von der Pulverbeaufschlagung sperren, und wobei die Verteilerstruktur mittels eines ein elektrisch leitendes Füllmaterial und ein hydrophobierendes Material umfassendes Gemisch gebildet wird.

2. Verfahren nach Anspruch 1, **dadurch gekennzeichnet, daß** die Verteilerstruktur sukzessive in einer Mehrzahl von Schichten aufgesprüht wird.

3. Verfahren nach einem der vorangehenden Ansprüche, **dadurch gekennzeichnet, daß** die Verteilerstruktur nach der Aufsprühung fixiert wird.

4. Verfahren nach Anspruch 3, **dadurch gekennzeichnet, daß** die Verteilerstruktur thermisch und/oder strahlungsinduziert und/oder mechanisch und/oder chemisch fixiert wird.

5. Verfahren nach Anspruch 3 oder 4, **dadurch gekennzeichnet, daß** die Verteilerstruktur durch Pressen oder Walzen fixiert wird.

6. Verfahren nach einem der vorangehenden Ansprüche, **dadurch gekennzeichnet, daß** die aktive Schicht auf einen Träger aufgesprüht und/oder aufgewalzt wird.

7. Verfahren nach einem der vorangehenden Ansprüche, **dadurch gekennzeichnet, daß** die Kanäle in der Verteilerstruktur räumlich angeordnet sind.

8. Verfahren nach einem der vorangehenden Ansprüche, **dadurch gekennzeichnet, daß** die Verteilerstruktur hydrophobe Kanäle umfaßt.

9. Verfahren nach einem der vorangehenden Ansprüche, **dadurch gekennzeichnet, daß** die Verteilerstruktur hydrophile Kanäle umfaßt.

10. Verfahren nach einem der vorangehenden Ansprüche, **dadurch gekennzeichnet, daß** das hydrophobierende Material PTFE ist.

11. Verfahren nach einem der vorangehenden Ansprüche, **dadurch gekennzeichnet, daß** das elektrisch leitende Füllmaterial Kohlenstoff ist.

12. Verfahren nach einem der vorangehenden Ansprüche, **dadurch gekennzeichnet, daß** das Material für die Verteilerstruktur katalytische Zusätze umfaßt.

13. Verfahren nach einem der vorangehenden Ansprüche, **dadurch gekennzeichnet, daß** auf einer Membran beidseitig eine elektrochemische Elektrode angeordnet wird.

## Claims

1. Process for the fabrication of an electrochemical electrode having a two-dimensional, electrochemically active layer, whereby a distribution structure comprising channels for feeding medium to the active layer and/or removing medium from the active layer is sprayed onto the active layer by means of a dry powder through a mask, wherein the mask has cut outs, through which the dry powder is sprayed, and has barriers that block off specific spatial areas of the active layer from application of the powder, and wherein the distribution structure is formed by means of a mixture comprising an electrically conducting filling material and a hydrophobic material.

2. Process according to claim 1, **characterized in that** the distribution structure is sprayed on successively in a plurality of layers.

3. Process according to one of the preceding claims, **characterized in that** the distribution structure after being sprayed on is fixed.

4. Process according to claim 3, **characterized in that** the distribution structure is fixed thermally and/or in a radiation-induced manner and/or mechanically and/or chemically.

5. Process according to claim 3 or 4, **characterized in that** the distribution structure is fixed by pressing or rolling.

6. Process according to one of the preceding claims, **characterized in that** the active layer is sprayed and/or rolled onto a carrier.

7. Process according to one of the preceding claims, **characterized in that** the channels in the distribution structure are disposed three-dimensionally.

8. Process according to one of the preceding claims, **characterized in that** the distribution structure comprises hydrophobic channels.

9. Process according to one of the preceding claims, **characterized in that** the distribution structure comprises hydrophilic channels.

10. Process according to one of the preceding claims, **characterized in that** the hydrophobic material is PTFE.

11. Process according to one of the preceding claims, **characterized in that** the electrically conducting filling material is carbon.

12. Process according to one of the preceding claims, **characterized in that** the material for the distribution structure comprises catalytic additives.

13. Process according to one of the preceding claims, **characterized in that** an electrochemical electrode is disposed on both sides of a membrane.

## Revendications

1. Procédé pour produire une électrode électrochimique avec une couche électrochimiquement active, étendue en nappe, où une structure de distributeur pour l'apport de milieu à la couche active et/ou le retrait de milieu de la couche active, qui comprend des canaux, est appliquée par pulvérisation sur la couche active au moyen d'une poudre sèche par l'intermédiaire d'un masque, où le masque comporte des évidements par l'intermédiaire desquels la poudre sèche est appliquée par pulvérisation, et comporte des barrières qui protègent des domaines spatiaux déterminés de la couche active de l'application de poudre, et où la structure de distributeur est formée au moyen d'un mélange comprenant une matière de charge électriquement conductrice et une matière conférant une hydrophobie.

2. Procédé selon la revendication 1 **caractérisé en ce que** la structure de distributeur est appliquée par pulvérisation successivement en une multiplicité de couches.

3. Procédé selon l'une des revendications précédentes **caractérisé en ce que** la structure de distributeur est fixée après l'application par pulvérisation.

4. Procédé selon la revendication 3 **caractérisé en ce que** la structure de distributeur est induite thermiquement et/ou par rayonnement et/ou fixée mécaniquement et/ou chimiquement.

5. Procédé selon la revendication 3 ou 4 **caractérisé en ce que** la structure de distributeur est fixée par compression ou au rouleau.

6. Procédé selon l'une des revendications précédentes **caractérisé en ce que** la couche active est appliquée sur un support par pulvérisation et/ou au rouleau.

7. Procédé selon l'une des revendications précédentes **caractérisé en ce que** les canaux sont disposés spatialement dans la structure de distributeur.

8. Procédé selon l'une des revendications précédentes **caractérisé en ce que** la structure de distributeur comprend des canaux hydrophobes.

9. Procédé selon l'une des revendications précédentes **caractérisé en ce que** la structure de distributeur comprend des canaux hydrophiles.

10. Procédé selon l'une des revendications précédentes **caractérisé en ce que** la matière conférant une hydrophobie est le PTFE.

11. Procédé selon l'une des revendications précédentes **caractérisé en ce que** la matière de charge électriquement conductrice est le carbone.

12. Procédé selon l'une des revendications précédentes **caractérisé en ce que** la matière pour la structure de distributeur comprend des additifs catalytiques.

13. Procédé selon l'une des revendications précédentes **caractérisé en ce qu'**une électrode électrochimique est disposée sur une membrane des deux côtés.
